# EUROPÄISCHE PATENTANMELDUNG

(11) **EP 4 254 281 A1**
(43) Veröffentlichungstag der Anmeldung: **04.10.2023**
(21) Anmeldenummer: 22165954.3
(22) Anmeldetag: 31.03.2022
(51) Int. Cl.: G06Q 10/00, G06Q 50/30

(54) **VERFAHREN UND ANORDNUNG ZUR WARTUNG VON FUNKTIONSEINHEITEN IN EINER GLEISANLAGE**

(71) Anmelder: Siemens Mobility GmbH, 81739 München (DE)
(72) Erfinder: Holz, Andrea, Braunschweig (DE); Zimmermann, Robert, Braunschweig (DE)
(74) Vertreter: Siemens Patent Attorneys

(57) **Zusammenfassung**

Gegenstand der Erfindung ist ein Verfahren zur Wartung von Funktionseinheiten (FE) in einer Gleisanlage (GA), bei dem das zu wartende Funktionselement für eine in einem Betriebsmodus der Gleisanlage (GA) stattfindende, bestimmungsgemäße Bedienung gesperrt wird, und das zu wartende Funktionselement für eine Wartung durch ein mobiles Wartungsgerät (WG1) gesteuert wird, wobei das Wartungsgerät (WG1) über eine Benutzerschnittstelle verfügt und bedient wird. Die zu wartende Funktionseinheit (FE) wird in einem Wartungsmodus durch das mobile Wartungsgerät (WG1) exklusiv reserviert und kann im Wartungsmodus allein von dem reservierenden Wartungsgerät (WG1) bedient werden. Im Wartungsmodus kann die Reservierung der zu wartenden Funktionseinheit (FE) nur von dem reservierenden Wartungsgerät (WG1) aufgehoben werden. Ferner umfasst die Erfindung eine Anordnung mit Steuerzentrale (LZ), ein Computerprogrammprodukt sowie eine Bereitstellungsvorrichtung.

## Beschreibung

Die Erfindung betrifft ein Verfahren zur Wartung von Funktionseinheiten in einer Gleisanlage, bei dem die zu wartende Funktionseinheit für eine in einem Betriebsmodus der Gleisanlage stattfindende, bestimmungsgemäße Bedienung gesperrt wird, und die wartende Funktionseinheit für eine Wartung durch ein mobiles Wartungsgerät gesteuert wird, wobei das Wartungsgerät über eine Benutzerschnittstelle verfügt und bedient wird. Außerdem betrifft die Erfindung eine Anordnung mit einer Steuerzentrale für eine Gleisanlage und mit mindestens einem mobilen Wartungsgerät für Funktionseinheiten der Gleisanlage. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Die auf einer Ablaufanlage vorhandenen Funktionseinheiten der Außenanlage, wie Gleisbremsen, Weichen usw. zum Beispiel, müssen regelmäßig gewartet bzw. bei eventuell auftretenden Störungen neu eingestellt werden. Dazu muss ein die Steuerzentrale bei Wartungen bedienender Instandhalter oder ein im Normalbetrieb die Steuerzentrale bedienender Bediener (im Folgenden der Einfachheit immer Bediener genannt) diese Funktionseinheit zunächst zur Wartung freigeben, d. h. für den Betrieb sperren. Ein die Wartung an der Funktionseinheit durchführender Instandhalter (im Folgenden kurz Instandhalter genannt) kann dann entsprechende Arbeiten direkt an der Funktionseinheit der Außenanlage vornehmen. Um anschließend die korrekte Funktion nach Abschluss der Arbeiten prüfen zu können, muss dann ein Betrieb durch den Bediener in einer Steuerzentrale der Anlage probeweis durchgeführt werden, bevor der reguläre Betrieb der Funktionseinheit wieder aufgenommen wird. Somit sind im Idealfall ein Bediener und ein Instandhalter für diese Arbeiten notwendig - der Instandhalter in der Außenanlage direkt an der Funktionseinheit (z. B. der Gleisbremse), der Bediener in der Steuerzentrale z. B. vor einer Instandhaltungssichtstation. Bei der Kommunikation zwischen beiden kann es dabei zu Missverständnissen kommen.

Die Aufgabe der Erfindung besteht darin, ein Verfahren zur Wartung von Funktionseinheiten in einer Gleisanlage bzw. eine Steuerzentrale für eine Gleisanlage mit mindestens einem mobilen Wartungsgerät anzugeben, wobei mit dem Verfahren bzw. mit der für dieses Verfahren geeigneten Gleisanlage mit Wartungsgerät eine Wartung von Funktionseinheiten der Gleisanlage mit geringem Aufwand und gleichzeitig unter Einhaltung eines hohen Sicherheitsniveaus möglich ist. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass die zu wartende Funktionseinheit für eine in einem Betriebsmodus der Gleisanlage stattfindende, bestimmungsgemäße Bedienung gesperrt wird, und das zu wartende Funktionselement für eine Wartung durch ein mobiles Wartungsgerät gesteuert wird, wobei das Wartungsgerät über eine Benutzerschnittstelle verfügt und bedient wird.

Der Begriff "Funktionseinheit" zielt auf eine bestimmte Funktion in dem technischen System der Gleisanlage ab, die durch eine bestimmungsgemäße Bedienung im Betrieb der Gleisanlage ausgelöst wird, die Bedienung erfolgt manuell oder automatisch insbesondere aus einer Steuerzentrale heraus oder durch verteilte Recheninstanzen. Beispielsweise ist eine Bremse in einer Ablaufanlage eine Funktionseinheit, wobei die (einheitliche) Funktion des Abbremsens einzelner Abläufe erfüllt wird. Eine Weiche soll (einheitlich) die Funktion erfüllen, einen Ablauf auf ein bestimmtes Gleis zu leiten. Somit wird deutlich, dass eine Funktionseinheit aus mehreren Baugruppen bestehen kann, welche jeweils Teilfunktion erfüllen, um die einheitliche Gesamtfunktion zu gewährleisten. Eine Wartung an einer Funktionseinheit muss also zumindest dann durchgeführt werden, wenn mindestens eine Teilfunktion der Funktionseinheit zu überprüfen und/oder zu manipulieren (Wartungsarbeiten wie Einstellarbeiten, Austausch von Ersatzteilen usw.) ist.

Das Wartungsgerät kann das zu wartende Funktionselement ansteuern. Hierbei können beispielsweise Testprozeduren oder manuelle Eingaben zur Ansteuerung verwendet werden. Außerdem kann eine Diagnose bestimmter Funktionen der Funktionseinheit durchgeführt werden. Die Benutzerschnittstelle, über die das Wartungsgerät verfügt, ermöglicht dabei die Bedienung der zu wartenden Funktionseinheit. Es kann sich hierbei um eine Tastatur oder auch einen Touchscreen handeln.

Dadurch, dass die zu wartende Funktionseinheit von dem mobilen Wartungsgerät exklusiv reserviert werden kann, ist mit einer hohen Sicherheit technisch ausgeschlossen, dass die zu wartende Funktionseinheit während der Wartungsarbeiten anderweitig bedient wird. Dies ist wichtig, damit die Funktionseinheit während der Wartung keine für den Instandhalter unerwarteten Aktionen, insbesondere Bewegungen, ausführt. Diese würden ein Unfallrisiko für den Instandhalter darstellen. Außerdem würde unter Umständen eine Wartungsprozedur unterbrochen, wodurch deren Erfolg nicht gesichert wäre.

Eine Reservierung der Funktionseinheit durch das Wartungsgerät geht erfindungsgemäß über eine bloße Sperrung der Funktionseinheit für den regulären, d.h. bestimmungsgemäßen Betrieb hinaus. Eine Reservierung der Funktionseinheit für ein bestimmtes Wartungsgerät beinhaltet zum Beispiel auch, dass andere Wartungsgeräte nicht auf die Funktionseinheit zugreifen können, wenn diese für den regulären Betrieb gesperrt ist. Außerdem kann die Reservierung im Wartungsmodus nur durch das reservierende Wartungsgerät aufgehoben werden. Damit hat der Instandhalter die Kontrolle darüber, die exklusive Reservierung der Funktionseinheit wieder aufzuheben. Danach ist es möglich, die Funktionseinheit wieder im Regelbetrieb zu verwenden.

Dadurch, dass die Reservierung - zumindest im planmäßig ablaufenden Wartungsbetrieb - nur über das mobile Wartungsgerät an damit seitens des Instandhalters wieder aufgehoben werden kann, ist das Aufheben der Reservierung ein bewusster Prozess des Instandhalters, der durch die exklusive Reservierung der zu wartenden Funktionseinheit geschützt werden soll. Damit können Unfälle aufgrund eines auftretenden Kommunikationsproblems zwischen dem Instandhalter und einem Bediener in der Steuerzentrale ausgeschlossen werden. Dies bedeutet ein höheres Sicherheitsniveau bei der Durchführung von Wartungsarbeiten, da die Wahrscheinlichkeit minimiert wird, dass ein Instandhalter durch eine versehentlich in den Normalbetrieb versetzten Funktionseinheit verletzt wird.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise ein Wandler, ein Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass die Sperrung der Funktionseinheit nur außerhalb des reservierenden Wartungsgerätes, insbesondere in einer Steuerzentrale für die Funktionseinheit aufgehoben werden kann.

Die Aufhebung der Sperrung wiederum kann vorzugsweise durch eine Steuerzentrale manuell oder automatisch vorgenommen werden. Die Wiedereingliederung der Funktionseinheit in den regulären Betrieb kann somit in zwei Schritten erfolgen. Der erste Schritt einer Aufhebung der Reservierung stellt sicher, dass der Instandhalter vor der Aufhebung der Reservierung aus der Gefahrenzone der Funktionseinheit gelangt ist, da die Aufhebung der Reservierung bewusst vom Instandhalter durchgeführt wird. Die Aufhebung der Sperrung als nachfolgender zweiter Schritt stellt sicher, dass die Funktionseinheit kontrolliert in den Regelbetrieb wieder aufgenommen wird, da in der Steuerzentrale Informationen über die gesamte Gleisanlage verfügbar sind.

Zum Beispiel könnte es erforderlich sein, dass die Sperrung einer gewarteten Funktionseinheit zunächst nicht aufgehoben wird, obwohl der Instandhalter die Reservierung aufgehoben hat, weil von der betreffenden Funktionseinheit abhängige andere Funktionseinheiten sich noch in einem Wartungszustand befinden, weil diese beispielsweise von einem anderen Instandhalter mithilfe eines anderen mobilen Wartungsgerätes gewartet werden. Eine gewartete Weiche dürfte beispielsweise noch nicht wieder entsperrt werden, wenn die darauffolgende Gleisbremse eines Ablaufberges noch durch einen Instandhalter gewartet wird, um zu verhindern, dass über die Weiche bereits Abläufe auf die noch im Wartungszustand befindliche Bremse geleitet werden.

Dieses Beispiel macht deutlich, dass über die Steuerzentrale (oder alternativ verteilte Recheninstanzen, zu denen auch die mobilen Wartungsgerät gehören können) die Gleisanlage als großes Ganzes überwacht werden kann. Daraus lässt sich ein Rechtemanagement ableiten, welches insbesondere über die Aufhebung von Reservierungen bzw. die Aufhebung von Sperrungen eine mehrstufige Sicherung verwirklichen kann und dadurch das Sicherheitsniveau bei der Wartung vorteilhaft erhöht (hierzu im Folgenden noch mehr).

Gemäß einer Ausgestaltung der Erfindung ist vorgesehen, dass die Funktionseinheiten über ID-Codes verfügen, mit denen eine eindeutige Identifizierung durch das Wartungsgerät und/oder eine Steuerzentrale möglich ist und dass die Sperrung und/oder Reservierung der Funktionseinheiten durch Übertragung des ID-Codes der zu sperrenden und/oder reservierenden Funktionseinheit erfolgt.

Die ID-Codes ermöglichen es vorteilhaft, Funktionseinheiten eindeutig identifizieren zu können und verringern daher ein Fehlerrisiko, wenn es darum geht, bestimmte Funktionseinheiten zu sperren bzw. zu reservieren und, sobald dies nicht mehr erforderlich ist, eine Aufhebung der Sperrung und/oder Aufhebung der Reservierung ebenfalls unter Anwendung der ID-Codes mit einem verringerten Fehlerrisiko durchzuführen.

Hierbei können die ID-Codes beispielsweise in verteilten Rechnerinstanzen, die Teile der Funktionseinheiten sind (beispielsweise Steuergeräte der Funktionseinheiten), hinterlegt sein. Diese ID-Codes können dann übertragen werden, wenn eine dieser Funktionseinheit durch die Steuerzentrale oder ein mobiles Wartungsgerät angesprochen wird.

Zusätzlich kann es besonders vorteilhaft sein, wenn auch der Steuerzentrale sowie den mobilen Wartungsgeräten ID-Codes zugeordnet sind, welche bei dem Verfahren ebenfalls übertragen werden können. Auf diese Weise kann beispielsweise eine eindeutige Zuordnung einer bestimmten Funktionseinheit (über deren ID-Code) zu einer bestimmten mobilen Wartungsgerät (über dessen ID-Code) durchgeführt werden. Dies lässt sich vorteilhaft besonders einfach in einer Computerinfrastruktur umsetzen und minimiert ein Fehlerrisiko.

Gemäß einer Ausgestaltung der Erfindung ist vorgesehen, dass die Steuerzentrale und/oder andere Wartungsgeräte für die Beendigung des Wartungsmodus der reservierten Funktionseinheit freigeschaltet werden, wenn das die Funktionseinheit reservierende Wartungsgerät eine Funktionsstörung desselben an die Steuerzentrale meldet oder ausfällt.

Dadurch, dass eine Freischaltung von anderen Steuereinrichtungen, also anderen Wartungsgeräten oder der Steuerzentrale erfolgt, kann auch bei Störungen oder bei Ausfall des die Wartung eigentlich durchführenden bzw. unterstützenden Wartungsgerätes des Instandhalters ein Normalbetrieb der Funktionseinheit wieder aufgenommen werden. Zu diesem Zweck muss die Funktionseinheit jedoch auf ihre Funktionsfähigkeit untersucht werden, da bei einem Abbruch der Wartung die Funktionsfähigkeit beeinträchtigt sein kann. Dies erfolgt vorzugsweise manuell und vorzugsweise durch den Instandhalter, der sich ohnehin in der Nähe der Funktionseinheit befindet.

Gemäß einer Ausgestaltung der Erfindung ist vorgesehen, dass nach dem Freischalten der Steuerzentrale und/oder der anderen Wartungsgeräte eine Beendigung des Wartungsmodus nur möglich ist, wenn vorher eine Bestätigung einer erfolgten Warnung an den Instandhalter registriert wurde.

Hierdurch wird eine zusätzliche Sicherheit geschaffen. Insbesondere kann der Bediener in der Steuerzentrale eine zusätzliche Information erhalten, ob eine Freischaltung der Funktionseinheit ermöglicht wird, ohne den Instandhalter außerhalb der Steuerzentrale zu gefährden. Bestätigt der Instandhalter, eine Warnung erhalten zu haben, ist dies sichergestellt. Hierzu können technische Einrichtungen und Kommunikationswege gewählt werden, die unabhängig von der Funktion des Wartungsgerätes sind (beispielsweise Sprechfunk) . Dies hat den Vorteil, dass auch bei einem kompletten Ausfall des Wartungsgerätes eine Bestätigung durch den Bediener in der Steuerzentrale eingeholt werden kann.

Gemäß einer Ausgestaltung der Erfindung ist vorgesehen, dass vor dem Beenden des Wartungsmodus für die zu wartende Funktionseinheit eine Reservierungsanfrage an ein anderes Wartungsgerät übertragen wird und, wenn die Reservierungsanfrage durch das andere Wartungsgerät bestätigt wird, die Reservierung unter Beibehaltung des Wartungsmodus auf dieses andere Wartungsgerät übertragen wird.

Hierdurch kann vorteilhaft eine Wartung fortgeführt werden, wenn eine Störung oder ein Ausfall des Wartungsgerätes, mit dem die Wartung begonnen wurde, vorliegt. Das zweite Wartungsgerät verfügt zu diesem Zweck über die erforderliche Software, sodass eine Wartung wieder aufgenommen und abgeschlossen werden kann. Das weitere Wartungsgerät wird beispielsweise durch einen anderen Instandhalter verwendet, der in diesem Fall auch unterstützend tätig werden kann. Bei dem anderen Instandhalter kann es sich auch um einen Supervisor handeln, dessen Wartungsgerät vorzugsweise einen erweiterten Funktionsumfang hat, der eine Übernahme der Wartungsaufgaben erlaubt. Alternativ können die zusätzlichen Features auch auf allen Wartungsgeräten installiert sein, so dass diese gleichberechtigte Partner (Peers) bilden.

Gemäß einer Ausgestaltung der Erfindung ist vorgesehen, dass die Aufhebung der Reservierung durch das reservierende Wartungsgerät und/oder durch die anderen Wartungsgeräte und/oder durch die Steuerzentrale nach der Anforderung der Aufhebung nur durchgeführt wird, wenn eine Autorisierungseingabe, insbesondere die Eingabe eines bestimmten Passworts, registriert wurde.

Hierdurch ist es möglich, die Aufhebung der Reservierung zu einem bewussten Prozess des Instandhalters oder Bedieners zu machen. Eine zusätzliche Abfrage erfordert die Aufmerksamkeit des Instandhalters oder Bedieners, sodass die Aufhebung nicht versehentlich erfolgen kann. Insbesondere, wenn die Autorisierungseingabe ein Passwort ist, kann diese auf einen bestimmten Personenkreis beschränkt werden, welcher das Passwort kennt. Dies kann insbesondere, wie bereits erwähnt, ein Supervisor sein oder auch der Bediener in der Steuerzentrale.

Die genannte Aufgabe wird alternativ mit dem eingangs angegebenen Anspruchsgegenstand (Anordnung) erfindungsgemäß auch dadurch gelöst, dass zwischen dem mindestens einen mobile Wartungsgerät und der Steuerzentrale eine Signalverbindung herstellbar ist und die Steuerzentrale sowie das mindestens eine mobile Wartungsgerät eingerichtet sind, ein Verfahren nach einem der voranstehenden Ansprüche durchzuführen.

Mit der Anordnung lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäße Anordnung.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:

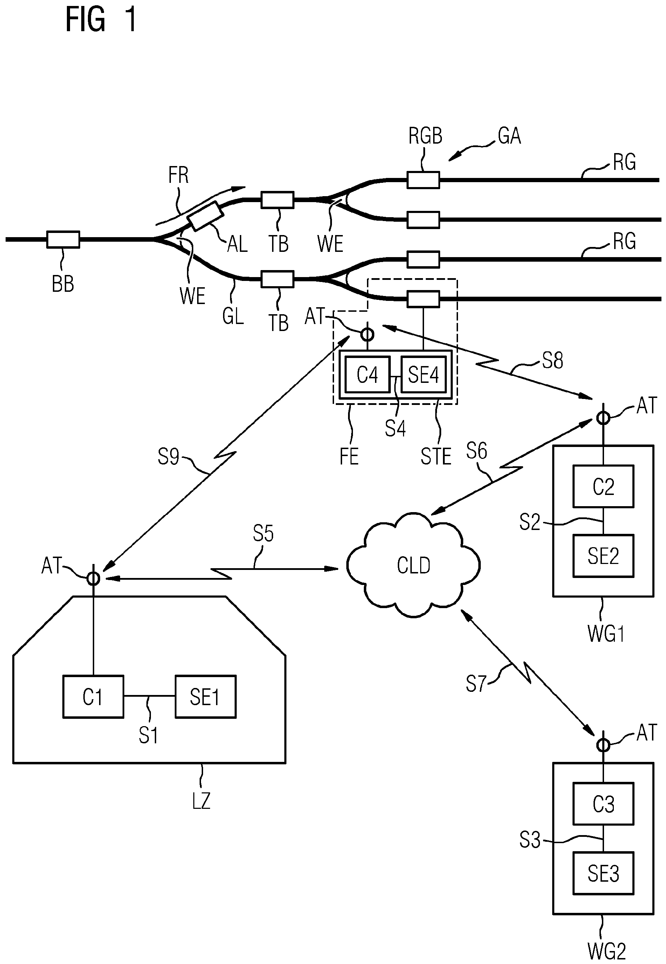

Figur 1 ein Ausführungsbeispiel der erfindungsbemäßen Anordnung mit ihren Wirkzusammenhängen schematisch, wobei ein Ausführungsbeispiel einer Computer-Infrastruktur der Anordnung im Stil eines Blockschaltbildes dargestellt ist und wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,

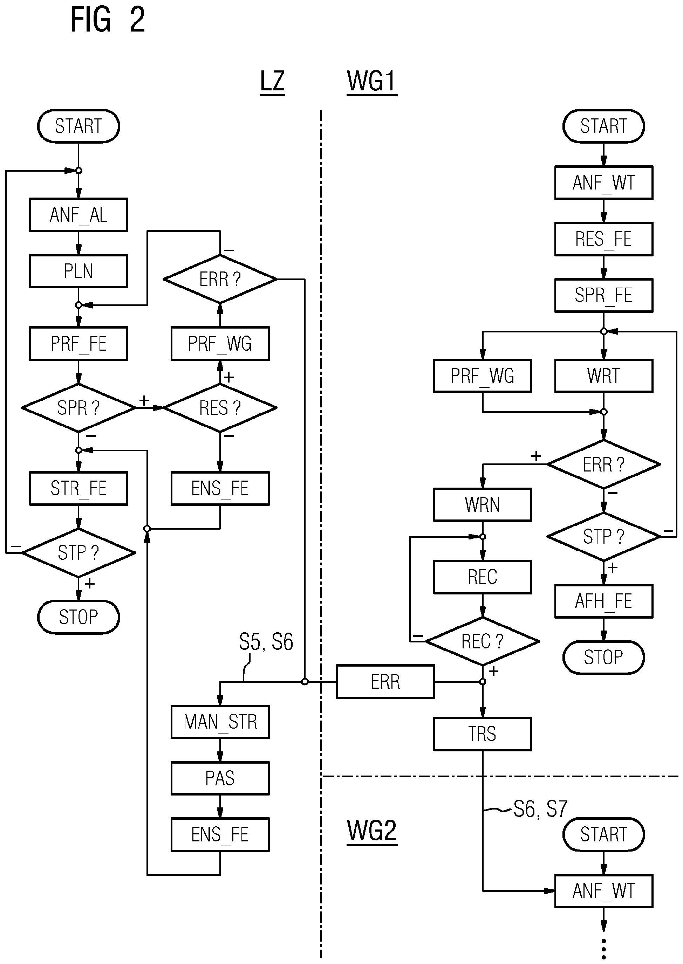

Figur 2 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind.

In Figur 1 ist eine Gleisanlage GA als Ablaufanlage beispielhaft schematisch dargestellt. Ein Ablauf AL läuft in einer Fahrtrichtung FR auf den Gleisen GL ab, wobei dieser dabei nach einer Bergbremse BB, eine Talbremse TB und Richtungsgleisbremsen RGB passiert. Über Weichen WE wird der Ablauf AL in das richtige Richtungsgleis RG geleitet. Sowohl die Weichen WE als auch die Bergbremse BB, die Talbremse TB sowie die Richtungsgleisbremsen RGB (im Folgenden gemeinsam als Gleisbremsen bezeichnet) sind als Funktionseinheiten FE zu verstehen, die jeweils auch eine Steuereinheit STE aufweisen (nur einmal exemplarisch dargestellt - aus Gründen der Übersichtlichkeit).

Alle Funktionseinheiten gemäß Figur 1, d. h. die Gleisbremsen und die Weichen, bilden ein Netzwerk mit einer Steuerzentrale LZ sowie (wenn eingeschaltet und in Betrieb) Wartungsgeräten WG1, WG2, welches in Figur 1 beispielhaft über Funkschnittstellen Kommunikationsverbindungen aufbaut. Dabei kann auch eine Cloud CLD zum Einsatz kommen, in der beispielsweise weitere Dienste wie z. B. Computerupdates für die Funktionseinheiten bereitgestellt werden. Selbstverständlich könnte das Netzwerk in nicht dargestellter Weise auch über kabelgebundene Schnittstellen verfügen.

Im Einzelnen weisen die Funktionselemente FE, Wartungsgeräte WG1, WG2 und die Steuerzentrale zum Zwecke der Kommunikation Antennen AT auf, und sind im Übrigen, wie schematisch dargestellt, mit folgenden Komponenten ausgestattet.

Die Steuerzentrale LZ weist einen ersten Computer C1 auf, der über eine erste Schnittstelle S1 mit einer ersten Speichereinrichtung SE1 verbunden ist. Das erste Wartungsgerät WG1 weist einen zweiten Computer C2 auf, der über eine zweite Schnittstelle S2 mit einer zweiten Speichereinrichtung SE2 verbunden ist. Das zweite Wartungsgerät WG2 ist mit einem dritten Computer C3 und einer dritten Speichereinrichtung SE3 unter Verwendung einer dritten Schnittstelle S3 genauso aufgebaut. Auch die Steuereinheit STE der exemplarisch dargestellten Funktionseinheit FE weist einen vierten Computer C4 auf, der über eine vierte Schnittstelle S4 mit einer vierten Speichereinrichtung SE4 verbunden ist. Die weiteren Funktionselemente sind in nicht dargestellter Weise genauso aufgebaut.

Die Steuerzentrale LZ kommuniziert über eine fünfte Schnittstelle S5, das erste Wartungsgerät WG1 über eine sechste Schnittstelle S6 und das zweite Wartungsgerät WG2 über eine siebte Schnittstelle S7 mit der Cloud CLD, wobei diese Geräte auch über die Cloud miteinander kommunizieren können.

Die Steuerzentrale LZ sowie das Wartungsgerät WG1 (welches gerade eine Wartung am Funktionselement FE durchführt) kommuniziert über eine Schnittstelle S8 mit der Funktionseinheit FE. Diese ist aus Gründen der Betriebssicherheit bzw. Übertragungssicherheit nicht mit der Cloud CLD verbunden.

Mit der Infrastruktur gemäß Figur 1 kann ein Verfahren gemäß Figur 2 durchgeführt werden. Um ein Funktionselement FE betreiben zu können, wird die Steuerzentrale LZ gestartet. Diese überwacht die Funktionen der Funktionselemente FE im Normalbetrieb der Gleisanlage GA. Nach einem Start wird nach einem Anforderungsschritt für einen Ablauf ANF_AL ein Planungsschritt PLN durchgeführt, um die Ansteuerung der Funktionseinheiten der Gleisanlage GL (in Figur 1 einer Ablaufanlage) für den Ablauf zu planen. Danach wird in einem Prüfschritt für die zum Einsatz kommenden Funktionseinheiten geprüft, ob diese für den Betrieb zur Verfügung stehen. In einem Abfrageschritt "Funktionseinheit gesperrt?" SPR? wird abgefragt, ob diese für eine Verwendung gesperrt sind. Ist dies nicht der Fall, kann in einem Steuerschritt für das Funktionselement STR_FE das betreffende Funktionselement gesteuert werden, damit der Ablauf AL, für den der Anforderungsschritt durchgeführt wurde, ordnungsgemäß in das vorgesehene Richtungsgleis RG geleitet werden kann.

In einem anschließenden Abfrageschritt für das Ende des Verfahrens STP? wird entschieden, ob das Verfahren gestoppt wird oder eine neue Anforderung für einen Ablauf angenommen wird.

Ergibt der Abfrageschritt SPR?, dass das Funktionselement gesperrt ist, wird zumindest, solange ein Abfrageschritt für die Reservierung des Funktionselementes für das Wartungsgerät WG1 ein positives Ergebnis erzielt und nach einem Prüfschritt für das Wartungsgerät PRF_WG ein Abfrageschritt nach einem Fehler im Wartungsgerät ERR? negativ ausfällt, eine rekursive Schleife durchlaufen, die mit einem erneuten Prüfschritt PRF FE für das Funktionselement einsetzt. Ergibt der Abfrageschritt für die Reservierung RES? jedoch, dass die Reservierung aufgehoben wurde, erfolgt ein Entsperrschritt ENS_FE für die Entsperrung der Funktionseinheit, sodass anschließend ein Steuerschritt STR FE für die Funktionseinheit durchgeführt werden kann (um, wie bereits beschrieben, den Ablauf AL zum Richtungsgleis RG zu leiten).

Soll an dem betreffenden Funktionselement FE eine Wartung durchgeführt werden, so wird das erste Wartungsgerät WG1 gestartet. Es erfolgt ein Anforderungsschritt für die Wartung ANF_WT, der die Prozedur einleitet. In einem Reservierungsschritt RES_FE wird das Funktionselement reserviert (dies führt in der Steuerzentrale LZ, wie bereits beschrieben, bei dem Abfrageschritt für die Reservierung RES? zu einem positiven Ergebnis). Anschließend wird in einem Sperrschritt für das Funktionselement SPR_FE das Funktionselement gesperrt (dieser Schritt könnte in nicht dargestellter Weise auch von dem Wartungsgerät WG1 in der Steuerzentrale LZ angefordert werden und durch die Steuerzentrale LZ durchgeführt werden).

Anschließend wird in einem Wartungsschritt WRT die Wartung des Funktionselements mit Unterstützung des ersten Wartungsgeräts WG1 durchgeführt. Gleichzeitig erfolgt im ersten Wartungsgerät WG1 ein Prüfschritt PRF_WG für das Wartungsgerät, um das Auftreten von Fehlern zu erkennen. In einem nachfolgenden Abfrageschritt ERR? wird ermittelt, ob Fehler aufgetreten sind. Ist dies nicht der Fall, wird in einem Abfrageschritt für das Ende der Wartung STP? geprüft, ob die Wartung beendet ist. Ist dies nicht der Fall, wird der nächste Wartungsschritt WRT mit paralleler Prüfung der Funktion des ersten Wartungsgeräts PRF_WG durchgeführt. Ist das jedoch Ende der Wartung erreicht, wird in einem Aufhebungsschritt für die Reservierung AFH_FE die Reservierung der Funktionseinheit aufgehoben und das Verfahren im ersten Wartungsgerät WG1 gestoppt (dies führt in der Steuerzentrale LZ im Abfrageschritt für die Reservierung RES? zu einem negativen Ergebnis, sodass die Nutzung der Funktionseinheit in der beschriebenen Weise wieder aufgenommen werden kann).

Führt die Abfrage für einen Fehler ERR? zu einem positiven Ergebnis, erfolgt ein Warnmeldeschritt WRN an den Nutzer des ersten Warngeräts WG1 (beispielsweise als Bildschirmanzeige und/oder Vibrationsalarm und/oder akustisches Signal und/oder Blinksignal, wobei hierbei Grundfunktionalitäten beispielsweise eines Tablets als erstes Wartungsgerät WG1 genutzt werden können). Das erste Warngerät WG1 wartet dann auf eine Bestätigung des Benutzers, welche beispielsweise über einen Touchscreen eingegeben werden kann und in einem Empfangsschritt REC für die Bestätigung registriert werden kann. In einem nachfolgenden Abfrageschritt REC? für die Bestätigung wird geprüft, ob die Bestätigung eingegeben wurde. Ist dies nicht der Fall, wird der Empfangsschritt REC für die Bestätigung wiederholt. Ist diese Bestätigung jedoch registriert worden, können alternativ zwei Maßnahmen hieraus abgeleitet werden, die in Figur 2 dargestellt sind.

Eine mögliche Maßnahme besteht in einem Übertragungsschritt TRS der Wartung auf ein fehlerfreies Wartungsgerät, in Figur 2 das zweite Wartungsgerät WG2. Hierbei können beispielsweise die Schnittstellen S6, S7 gemäß Figur 1 genutzt werden. Das zweite Wartungsgerät WG2 muss zu diesem Zweck gestartet werden und erhält in einem ersten Anforderungsschritt für die Wartung ANF_WT die erforderlichen Daten. Das weitere Verfahren funktioniert wie obenstehend zum ersten Wartungsgerät WG1 beschrieben.

Eine andere Möglichkeit besteht darin, dass ein Fehlermeldeschritt ERR zu einer Übertragung des Fehlers über die fünfte Schnittstelle S5 und die sechste Schnittstelle S6 gemäß Figur 1 in die Steuerzentrale LZ übertragen wird. Dies führt dazu, dass ein manueller Inbetriebnahmeschritt MAN_STR der Funktionseinheit FE durchgeführt wird. Mit anderen Worten wird überprüft, ob die Funktionseinheit FE trotz abgebrochener Wartungsmaßnahme funktionsfähig ist. Wird dies bestätigt, beispielsweise durch einen Wartungsmitarbeiter, so kann in der Steuerzentrale LZ ein Autorisierungsschritt PAS beispielsweise durch eine Passworteingabe durch einen Instandhalter durchgeführt werden. Dieser ermöglicht es, in der Steuerzentrale LZ einen Entsperrschritt für die Entsperrung ENS_FE durchzuführen, obwohl die Reservierung durch das erste Wartungsgerät WG1 nicht aufgehoben wurde. Dies bietet eine Möglichkeit, eine Funktionseinheit auch dann wieder in Betrieb zu nehmen, wenn das Wartungsgerät WG1 völlig ausfällt und deswegen durch das Wartungsgerät eine Reservierung nicht mehr aufgehoben werden kann.

### Bezugszeichenliste

- LZ: Steuerzentrale
- WG1 ... WG2: Wartungsgerät
- GA: Gleisanlage
- FR: Fahrtrichtung
- GL: Gleis
- RG: Richtungsgleis
- AL: Ablauf
- WE: Weiche
- BB: Bergbremse
- TB: Talbremse
- RGB: Richtungsgleisbremse
- FE: Funktionseinheit
- CLD: Cloud
- AT: Antenne
- STE: Steuereinheit
- CP1 ... CP4: Computer
- SE1 ... SE4: Speichereinrichtung
- S1 ... S9: Schnittstelle
- ANF_AL: Anforderungsschritt für einen Ablauf
- PLN: Planungsschritt
- PRF_FE: Prüfschritt für Funktionseinheit
- SPR?: Funktionseinheit gesperrt?
- STR_FE: Steuerschritt Funktionselement
- STP?: Abfrageschritt für Ende
- RES?: Abfrageschritt für Reservierung
- ANF_WT: Anforderungsschritt Wartung
- RES_FE: Reservierungsschritt für Funktionseinheit
- AFH_FE: Aufhebungsschritt für Reservierung
- SPR_FE: Sperrschritt für Funktionseinheit
- ENS_FE: Entsperrschritt für Sperrung
- WRT: Wartungsschritt
- PRF_WG: Prüfschritt für Wartungsgerät
- WRN: Warnmeldeschritt
- REC: Empfangsschritt für Bestätigung
- REC?: Abfrageschritt für Bestätigung
- FRE: Freischaltungsschritt für Entsperrschritt
- PAS: Autorisierungsschritt
- ERR: Fehlermeldeschritt
- MAN_STR: manueller Inbetriebnahmeschritt
- ERR?: Abfrageschritt für Fehler
- TRS: Übertragungsschritt auf anderes Wartungsgerät

## Patentansprüche

1. Verfahren zur Wartung von Funktionseinheiten (FE) in einer Gleisanlage (GA), bei dem
• das zu wartende Funktionselement für eine in einem Betriebsmodus der Gleisanlage (GA) stattfindende, bestimmungsgemäße Bedienung gesperrt wird,
• das zu wartende Funktionselement für eine Wartung durch ein mobiles Wartungsgerät (WG1, WG2) gesteuert wird, wobei das Wartungsgerät (WG1, WG2) über eine Benutzerschnittstelle verfügt und bedient wird,
**dadurch gekennzeichnet,**
**dass**
• die zu wartende Funktionseinheit (FE) in einem Wartungsmodus durch das mobile Wartungsgerät (WG1, WG2) exklusiv reserviert wird und im Wartungsmodus allein von dem reservierenden Wartungsgerät (WG1, WG2) bedient werden kann,
• im Wartungsmodus die Reservierung der zu wartenden Funktionseinheit (FE) nur von dem reservierenden Wartungsgerät (WG1, WG2) aufgehoben werden kann.

2. Verfahren nach Anspruch 1
**dadurch gekennzeichnet,**
**dass** eine Sperrung der Bedienung der Funktionseinheit (FE) auf Grund der Reservierung und bis auf die Bedienung durch das Wartungsgerät, nur außerhalb des reservierenden Wartungsgerätes (WG1, WG2), insbesondere in einer Steuerzentrale (LZ) für die Funktionseinheit (FE) aufgehoben werden kann.

3. Verfahren nach einem der voranstehenden Ansprüche,
**dadurch gekennzeichnet,**
**dass** die Funktionseinheiten (FE) über ID-Codes verfügen, mit denen eine eindeutige Identifizierung durch das Wartungsgerät (WG1, WG2) und/oder eine Steuerzentrale (LZ) möglich ist und dass die Sperrung und/oder Reservierung der Funktionseinheiten (FE) durch Übertragung des ID-Codes der zu sperrenden und/oder reservierenden Funktionseinheit (FE) erfolgt.

4. Verfahren nach einem der voranstehenden Ansprüche,
**dadurch gekennzeichnet,**
**dass** die Steuerzentrale (LZ) und/oder andere Wartungsgeräte (WG1, WG2) für die Beendigung des Wartungsmodus der reservierten Funktionseinheit (FE) freigeschaltet werden, wenn das die Funktionseinheit (FE) reservierende Wartungsgerät (WG1, WG2) ausfällt oder eine Funktionsstörung desselben durch die Steuerzentrale (LZ) erkannt wird.

5. Verfahren nach Anspruch 4,
**dadurch gekennzeichnet,**
**dass** nach dem Freischalten der Steuerzentrale (LZ) und/oder der anderen Wartungsgeräte (WG1, WG2) eine Beendigung des Wartungsmodus nur möglich ist, wenn vorher eine Bestätigung einer erfolgten Warnung an einen die Wartungsarbeiten durchführenden Instandhalter registriert wurde.

6. Verfahren nach einem der Ansprüche 4 bis 5,
**dadurch gekennzeichnet,**
**dass** vor dem Beenden des Wartungsmodus für die zu wartende Funktionseinheit (FE) eine Reservierungsanfrage an ein anderes Wartungsgerät (WG1, WG2) übertragen wird und, wenn die Reservierungsanfrage durch das andere Wartungsgerät (WG1, WG2) bestätigt wird, die Reservierung unter Beibehaltung des Wartungsmodus auf dieses andere Wartungsgerät (WG1, WG2) übertragen wird.

7. Verfahren nach einem der voranstehenden Ansprüche,
**dadurch gekennzeichnet,**
**dass** die Aufhebung der Reservierung durch das reservierende Wartungsgerät (WG1, WG2) und/oder durch die anderen Wartungsgeräte (WG1, WG2) und/oder durch die Steuerzentrale (LZ) nach der Anforderung der Aufhebung nur durchgeführt wird, wenn eine Bestätigungsgeingabe, insbesondere die Eingabe eines bestimmten Passworts, registriert wurde.

8. Anordnung mit einer Steuerzentrale (LZ) für eine Gleisanlage (GA) und mit mindestens einem mobilen Wartungsgerät (WG1, WG2) für Funktionseinheiten (FE) der Gleisanlage (GA),
**dadurch gekennzeichnet,**
**dass** zwischen dem mindestens einen mobile Wartungsgerät (WG1, WG2) und der Steuerzentrale (LZ) eine Signalverbindung herstellbar ist und die Steuerzentrale (LZ) sowie das mindestens eine mobile Wartungsgerät (WG1, WG2) eingerichtet sind, ein Verfahren nach einem der voranstehenden Ansprüche durchzuführen.

9. Computerprogrammprodukt mit Programmbefehlen zur Durchführung des Verfahrens nach einem der Ansprüche 1 - 7.

10. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.
